Europäisches Patentamt

European Patent Office

Office européen des brevets

(11) Veröffentlichungsnummer: **0 489 182 A1**

## (12) EUROPÄISCHE PATENTANMELDUNG

(21) Anmeldenummer: **90123070.6**

(22) Anmeldetag: **03.12.90**

(51) Int. Cl.5: **G01N 3/04**

(43) Veröffentlichungstag der Anmeldung:
**10.06.92 Patentblatt 92/24**

(84) Benannte Vertragsstaaten:
**AT BE CH DE DK ES FR GB GR IT LI LU NL SE**

(71) Anmelder: **CARL SCHENCK AG**
**Landwehrstrasse 55 Postfach 40 18**
**W-6100 Darmstadt(DE)**

(72) Erfinder: **Pohl, Andreas, Ing. grad.**
**Rinstrasse 69**
**W-6114 Gross-Umstadt(DE)**

(54) **Biegemomentfreie Einspannvorrichtung für eine Prüfmaschine.**

(57) Eine biegemomentfreie Einspannvorrichtung für eine Prüfmaschine zur Aufnahme von Proben zur Zug- und/oder Druck- und/oder Torsionsbelastung mit einem Einspannkörper zur Aufnahme der Probenenden soll einfach aufgebaut sein und stets selbsttätig eine biegemomentfreie Einspannung der Probe sicherstellen. Dies wird dadurch erreicht, daß der Einspannkörper (4, 4') um eine erste Achse (9) drehbar in einem Aufnahmekörper (10) gelagert ist, wobei der Aufnahmekörper (10) um eine zweite Achse (13) drehbar in einem Kraftübertragungskörper (14) gelagert ist, und wobei die erste Achse (9) orthogonal zur zweiten Achse (13) ist, und die beiden Drehachsen (9, 13) jeweils orthogonal zur Belastungsachse (3) der Prüfmaschine angeordnet sind, und die beiden Drehachsen (9, 13) und die Belastungsachse (3) einen gemeinsamen Schnittpunkt (21) haben.

EP 0 489 182 A1

Die Erfindung betrifft eine biegemomentfreie Einspannvorrichtung für eine Prüfmaschine gemäß Oberbegriff des Patentanspruchs 1.

Bei der Zug- und/oder Druckprüfung von Prüfkörpern in Prüfmaschinen soll die Probe möglichst genau definierten Belastungen ausgesetzt werden. So sollen beim Einspannen und bei Belastung der Probe keine unerwünschten Biegebeanspruchungen auf die Probe aufgebracht werden. Solche Beanspruchungen können z. B. durch Verkanten der Probe oder Versatz der Einspannköpfe, durch Fertigungsungenauigkeiten an den Einspannstellen der Probe oder ähnliche Faktoren auftreten. Insbesondere bei spröden Werkstoffen wie z. B. Keramikproben isteine zentrische Krafteinleitung erforderlich, da diese Werkstoffe besonders empfindlich gegenüber Biegebeanspruchung sind. Um Biegebeanspruchungen auf die Probe zu vermeiden, muß der Prüfkörper derart in den Einspannköpfen der Prüfmaschine gehalten sein, daß die Belastungsachse der Prüfmaschine mit der Längsachse der Probe übereinstimmt.

Durch die DE-OS 37 31 460 ist eine Einspannvorrichtung bekannt, die so einstellbar ist, daß ein Prüfstück exakt zentrisch eingespannt werden kann. Diese Einspannvorrichtung weist eine den Prüfkörper aufnehmende Einspannplatte und einen mit der Belastungseinrichtung verbundenen Einspannkörper auf. Zur Ausrichtung des Prüfstücks können Einspannplatte und Einspannkörper vor Versuchsbeginn mit Hilfe von Einstellbolzen in Bezug auf Achsversatz und im Bezug auf Winkelversatz zueinander ausgerichtet werden.

Bei Belastung der Probe können eventuell auftretende Mikroverformungen der Probe oder des Einspannkopfes die Lage der Probe in Bezug auf die Belastungsachse verändern. Diese während Belastung der Probe auftretenden Lageveränderungen der Probe können nicht ausgeglichen werden, da Einspannplatte und Einspannkopf vor Prüfbeginn zueinander ausgerichtet werden und diese Position mittels Einstellbolzen fest fixiert ist.

Aufgabe der vorliegenden Erfindung ist es daher, eine Einspannvorrichtung zur biegemomentfreien Einspannung für Proben zu schaffen, die einfach aufgebaut ist und stets selbsttätig eine biegemomentfreie Einspannung der Probe sicherstellt.

Diese Aufgabe wird erfindungsgemäß durch die im kennzeichnenden Teil des Patentanspruchs 1 angegebenen Merkmale gelöst. Durch die Einspannung der Probe in einem drehbar um eine erste Achse in einem Aufnahmekörper gelagerten Einspannkörper, wobei der Aufnahmekörper senkrecht zur ersten Achse um eine zweite Achse in einem Kraftübertragungskörper drehbar gelagert ist und beide Drehachsen senkrecht zur Belastungsachse der Prüfmaschine angeordnet sind, ergibt sich eine einfache, leicht zu betätigende Einspannvorrichtung, die insbesondere für sehr spröde Proben wie z. B. Keramikproben geeignet ist.

Diese kardanische Lagerung der Probe verhindert die Entstehung von Biegemomenten an der Probe beim Einspannvorgang und bei der nachfolgenden Belastung der Probe, da sich die Probenenden weitgehend zwangsfrei aufeinander einstellen können, d. h. die Probe sich stets in Belastungsrichtung ausrichten kann. Da durch die kardanische Lagerung stets selbsttätig eine biegemomentfreie Einspannung der Probe sichergestellt ist, kann auf eine Messung der Spannungsverteilung an der Probe vor Prüfbeginn verzichtet werden.

Eine zweckmäßige Ausgestaltung sieht vor, daß der Einspannkörper als Welle ausgebildet ist, und der Aufnahmekörper eine zur Lagerung der Welle entsprechende Bohrung aufweist. Durch diese Ausgestaltung kann die Einspannvorrichtung kostengünstig und einfach gefertigt werden.

Eine weitere Ausgestaltung sieht vor, daß die Welle in einer der Symmetrieebenen einen Schlitz zur kraftschlüssigen Aufnahme der Probe aufweist. Somit kann das Probenende im Schlitz aufgenommen werden und mittels Klemmschrauben kraftschlüssig gehalten werden.

Eine vorteilhafte Ausgestaltung ergibt sich, wenn die den Schlitz begrenzenden Wände Rillen aufweisen. Beim Festklemmen der Probenenden mittels Klemmschrauben greifen die Rillen zahnartig in das Probenende ein, wodurch eine kraft-/formschlüssige Aufnahme der Probe erreicht wird.

Eine Weiterbildung der Erfindung sieht eine hydrostatische Lagerung des Einspannkörpers und des Aufnahmekörpers vor. Durch diese Ausbildung wird eine reibungsarme Lagerung erreicht, die insbesondere frei von der Coulomb'schen Haftreibung ist.

Die Erfindung wird nachfolgend an Ausführungsbeispielen in den Zeichnungen dargestellt und in der Beschreibung näher erläutert. Es zeigen:

Fig. 1: Einspannvorrichtung für eine Rundprobe in Schnittdarstellung

Fig. 2: einen Schnitt längs der Linie II-II in Fig. 1

Fig. 3: einen Schnitt längs der Linie II-II in Fig. 1, wobei der Einspannkörper zur Aufnahme von Flachproben ausgebildet ist.

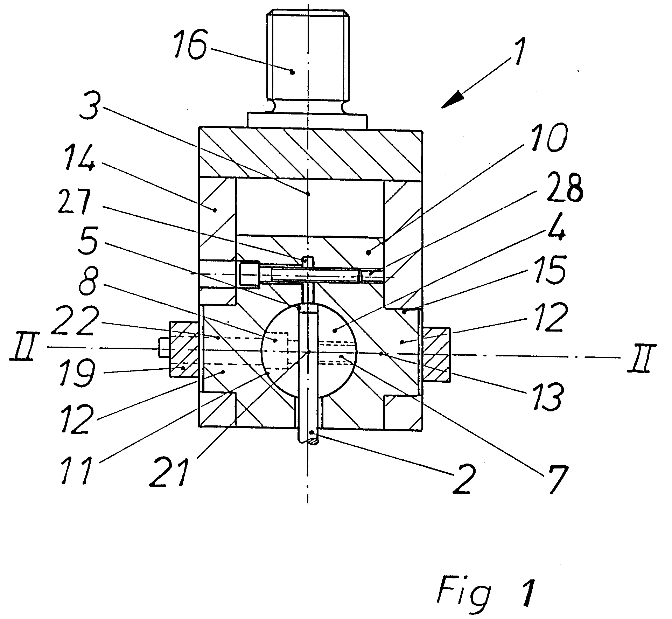

Fig. 1 zeigt eine obere Einspannvorrichtung 1 in die eine Rundprobe 2 zur Zug- und/oder Druck- und/oder Torsionsbelastung eingespannt ist. In einer nicht dargestellten Materialprüfmaschine sind zwei Einspannvorrichtungen 1 in Vertikalrichtung fluchtend übereinander angeordnet, wobei die obere Einspannvorrichtung 1 beispielsweise an der Quertraverse des Belastungsrahmens der Prüfmaschine angeordnet sein kann und die untere Einspannvorrichtung mit einer nicht dargestellten Belastungseinrichtung verbunden ist. Die obere und die untere Einspannvorrichtung haben den gleichen Aufbau, daher ist nur die obere Einspannvorrichtung 1 in Fig. 1 dargestellt. Die Belastungseinrichtung weist eine Belastungsachse 3 auf, in der die Belastungskräfte aufgebracht werden. Eine biegemomentfreie Einspannung der Probe 2 ist dann gewährleistet, wenn die Belastungsachse 3 mit der Längsachse der Probe 2 übereinstimmt.

Die Probenenden der Rundprobe 2 sind in einem als Welle 4 ausgebildeten Einspannkörper aufgenommen. Die Welle 4 weist mittig in der Vertikalen eine dem Durchmesser des Probenendes angepaßte erste radiale Durchgangsbohrung 5 auf, an die sich beidseitig in axialer Erstreckung der Welle 4 ein Schlitz 6 anschließt. In der Welle 4 ist auf jeder Seite senkrecht zur ersten radialen Durchgangsbohrung 5 jeweils eine weitere radiale Durchgangsbohrung 7 vorgesehen, die mit Gewinde zur Aufnahme von Schrauben 8 versehen sind. Diese in der Horizontalen angeordneten Schrauben 8 überbrücken den Schlitz 6 und bewirken beim Einschrauben eine Klemmung der in der ersten radialen Durchgangsbohrung 5 eingesetzten Rundprobe 2.

Zur Aufnahme von Flachproben wird in der axialen Erstreckung der Welle 4 mittig in der Vertikalen ein dem Probenende angepaßter Schlitz angeordnet. Die Klemmung erfolgt wie bei der Rundprobe 2 mittels in der Horizontalen in Gewindebohrungen eingeschraubter Schrauben 8. Diese Ausbildung ist in den Figuren nicht dargestellt.

Bei Proben aus karbonfaserverstärktem Kohlenstoff ist die kraftschlüssige Einspannung der Probe 2 mittels Schrauben 8 nicht ausreichend. Für die sichere Einspannung dieser Proben werden in die die radiale Durchgangsbohrung 5 bzw. den Schlitz 6 begrenzenden Wände zur Aufnahme der Probe 2 Rillen eingebracht, die sich beim Einspannen der Probe 2 zahnartig in die Probe 2 einsetzen und zusätzlich zur kraftschlüssigen Aufnahme eine formschlüssige Aufnahme der Probe 2 bewirken.

Die Welle 4 ist drehbar um ihre Drehachse 9 in einem quaderförmigen Aufnahmekörper 10 gelagert, der zur Aufnahme der Welle 4 eine dem Durchmesser der Welle 4 entsprechende Durchgangsbohrung 11 aufweist, so daß eine Gleitlagerung der Welle 4 ermöglicht wird.

Der Aufnahmekörper 10 weist zwei Lagerzapfen 12 auf, die in der Horizontalen einander gegenüberliegend angeordnet sind. Die Drehachse 13 der Lagerzapfen 12 verläuft orthogonal zur Drehachse 9 der Welle 4. Beide Drehachsen 9, 13 liegen in einer gemeinsamen horizontalen Ebene.

Die Lagerzapfen 12 sind drehbar in einem den Aufnahmekörper 10 umgreifenden Lagerbock 14 gelagert, der zur Lagerung des Aufnahmekörpers 10 zwei dem Durchmesser der Lagerzapfen 12 entsprechende Bohrungen 15 aufweist. Über einen in der Belastungsachse 3 sich erstreckenden Gewindezapfen 16 ist der Lagerbock 14 der oberen Einspannvorrichtung 1' mit der Quertraverse der Prüfmaschine und der Lagerbock 14 der unteren Einspannvorrichtung 1 mit der Belastungseinrichtung der Prüfmaschine zur Krafteinleitung verbunden. Die in den Aufnahmekörper 10 eingesetzte Welle 4 ist mittels die Durchgangsbohrung 11 abdeckender am Aufnahmekörper 10 angeschraubter Deckel 17 gegen axiales Verschieben gesichert. In den Deckel 17 sind Stifte 18 eingesetzt, die einstellbar und arretierbar sind. Mit den Stiften 18 kann die Lage der Welle 4 in axialer Richtung derart positioniert werden, daß die Mittelachse der radialen Durchgangsbohrung 5 zur Aufnahme der Probe 2 mit der Belastungsachse 3 übereinstimmt.

Die Welle 4 kann auch hydrostatisch oder über Wälzlager gelagert sein, so daß eine reibungsarme Lagerung und insbesondere bei Belastung der Probe 2 freie Drehbarkeit der Welle 4 und des Aufnahmekörpers 10 in den Lagerstellen gewährleistet ist. Die Welle 4 bzw. die Lagerzapfen 12 und die entsprechenden Bohrungen 11, 15 können mit einer Beschichtung, z. B. aus einem Kunststoff, Metallkarbiden oder Nitriten oder dgl. mit niedrigem Reibbeiwert, versehen sein. In die Lagerstellen kann zusätzlich ein Schmiermittel eingebracht werden. Auf diese Weise wird die Beweglichkeit zwischen Welle 4 bzw. Lagerzapfen 12 und Bohrungen 11, 15 erhöht bzw. die Reibung weiter herabgesetzt.

Die im Lagerbock 14 zur Lagerung des Aufnahmekörpers 10 vorhandenen Bohrungen 15 sind ebenfalls mit einem am Lagerbock 14 befestigten Deckel 19 abgedeckt. In die Deckel 19 sind ebenfalls Stifte 20 eingesetzt, die ein Verschieben des Aufnahmekörpers 10 längs der Drehachse 13 ermöglichen. Der Aufnahmekörper 10 muß derart in den Lagerstellen gelagert sein, daß die Drehachse 9 der Welle 4 und die Drehachse 13 des Aufnahmekörpers 10 orthogonal zueinander verlaufen und jeweils orthogonal zur Belastungsachse 3 der Prüfmaschine angeordnet sind. Weiterhin müssen sich die beiden Drehachsen 9, 13 und die Belastungsachse 3 in einem gemeinsamen Schnittpunkt 21 schneiden.

Vor Prüfbeginn wird eine zur Aufnahme der Probe 2 passende Welle 4 in den Aufnahmekörper 10 eingesetzt. Danach wird die Probe 2 in die radiale Durchgangsbohrung 5 eingesetzt und mittels der Schrauben 8 festgeklemmt. Hierzu sind im Aufnahmekörper 10 und in dem Deckel 19 Bohrungen 22 vorgesehen, die bezüglich die Schrauben 8 aufnehmende Bohrungen 7 fluchtend angeordnet sind. Durch diese im Aufnahmekörper 10 und Dek-

kel 19 angeordneten Bohrungen 22 ist bei im Aufnahmekörper 10 eingesetzter Welle 4 ein Lösen und Festziehen der Schrauben 8 möglich.

Eine Einstellung des Lagerspiels der in der Bohrung 11 des Aufnahmekörpers 10 gelagerten Welle 4 wird über einen im Aufnahmekörper sich an die Bohrung 11 anschließenden Schlitz 27 erreicht, der über Schrauben 28 geklemmt werden kann. Die Einstellung des Lagerspiels der in der Bohrung 15 des Lagerbocks 14 gelagerten Lagerzapfen 12 erfolgt ebenfalls über einen in der Zeichnung nicht dargestellten Schlitz, der sich an die Bohrung 15 anschließt und über Schrauben geklemmt werden kann.

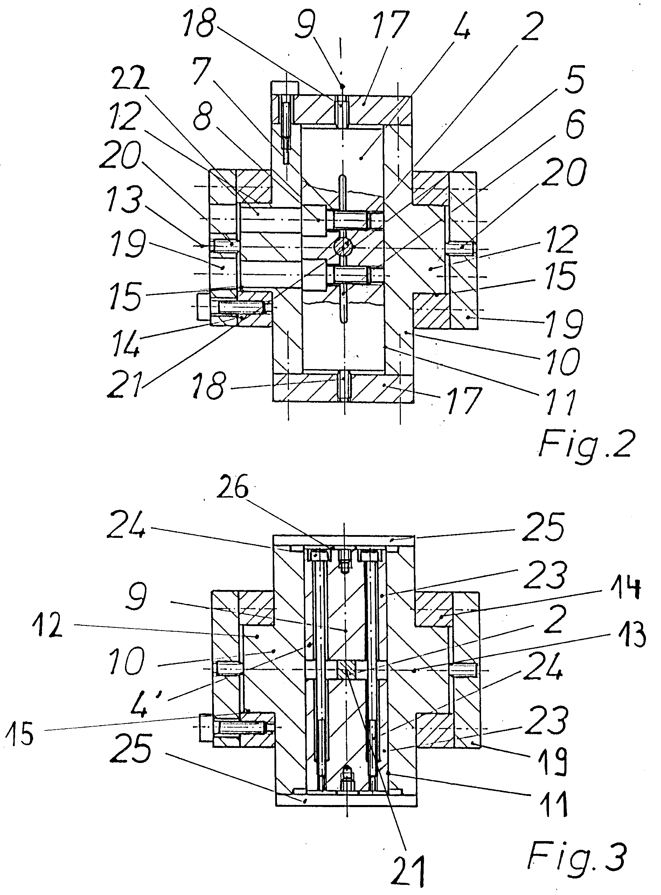

In Fig. 3 ist eine weitere Ausführung des Einspannkörpers zur Aufnahme der Probe 2 dargestellt. Der Einspannkörper ist als Welle 4' ausgebildet, die mittig in der Ebene senkrecht zur Drehachse 9 geteilt ist. Eine Flachprobe 2 wird zwischen die beiden Wellenteile 23 aufgenommen. Parallel zur Drehachse 9 der Welle 4' sind in axialer Richtung Paßschrauben 24 eingesetzt, die die beiden Wellenteile 23 verbinden und eine Klemmung der Probe 3 bewirken. Die Welle 4' ist wie bereits zu Fig. 1 und Fig. 2 beschrieben, in einem Aufnahmekörper 10 um die Drehachse 9 drehbar gelagert. Um einen Gleichlauf der beiden Wellenteile 23 zu erreichen, stützen sich an den Wellenenden 26 der Wellenteile 23 Biegefedern 25 ab, die gegensinnig mit der gleichen Kraft belastet werden und am Aufnahmekörper 10 befestigt sind. Der weitere Aufbau der in Fig. 3 dargestellten Einspannvorrichtung 1 ist dem bereits beschriebenen Aufbau der in Fig. 1 und 2 gezeigten Einspannvorrichtung gleich. Gleiche Bezugsziffern entsprechen gleichen Teilen.

## Patentansprüche

1. Biegemomentfreie Einspannvorrichtung für eine Prüfmaschine zur Aufnahme von Proben zur Zug- und/oder Druck- und/oder Torsionsbelastung mit einem Einspannkörper zur Aufnahme der Probenenden, dadurch gekennzeichnet, daß der Einspannkörper (4, 4') um eine erste Achse (9) drehbar in einem Aufnahmekörper (10) gelagert ist, wobei der Aufnahmekörper (10) um eine zweite Achse (13) drehbar in einem Kraftübertragungskörper (14) gelagert ist, und wobei die erste Achse (9) orthogonal zur zweiten Achse (13) ist, und die beiden Drehachsen (9, 13) jeweils orthogonal zur Belastungsachse (3) der Prüfmaschine angeordnet sind, und die beiden Drehachsen (9, 13) und die Belastungsachse (3) einen gemeinsamen Schnittpunkt (21) haben.

2. Biegemomentfreie Einspannvorrichtung nach Patentanspruch 1, dadurch gekennzeichnet, daß der Einspannkörper (4, 4') als Welle ausgebildet ist und der Aufnahmekörper (10) eine entsprechende Bohrung (11) zur Lagerung der Welle (4, 4') aufweist.

3. Biegemomentfreie Einspannvorrichtung nach Anspruch 1 oder 2, dadurch gekennzeichnet, daß der Aufnahmekörper (10) Lagerzapfen (12) aufweist, die in entsprechenden Bohrungen (15) des Kraftübertragungskörpers (14) gelagert sind.

4. Biegemomentfreie Einspannvorrichtung nach einem oder mehreren der vorhergehenden Ansprüche, dadurch gekennzeichnet, daß die Welle in einer der Symmetrieebenen einen Schlitz (6) oder eine radiale Durchgangsbohrung (5) zur kraftschlüssigen Aufnahme der Probe (2) aufweist.

5. Biegemomentfreie Einspannvorrichtung nach einem oder mehreren der vorhergehenden Ansprüche, dadurch gekennzeichnet, daß die Welle (4, 4') mittig in der Ebene senkrecht zur Drehachse (9) geteilt ist und die beiden Wellenteile (23) mittels Paßschrauben (24) verbunden sind.

6. Biegemomentfreie Einspannvorrichtung nach einem oder mehreren der vorhergehenden Ansprüche, dadurch gekennzeichnet, daß die den Schlitz (6) oder die radiale Durchgangsbohrung (5) begrenzenden Wände Rillen aufweisen.

7. Biegemomentfreie Einspannvorrichtung nach einem oder mehreren der vorhergehenden Ansprüche, dadurch gekennzeichnet, daß der Aufnahmekörper (10) und der Einspannkörper (4, 4') hydrostatisch gelagert sind.

8. Biegemomentfreie Einspannvorrichtung nach einem oder mehreren der vorhergehenden Ansprüche, dadurch gekennzeichnet, daß der Einspannkörper (4, 4') und der Aufnahmekörper (10) über Wälzlager gelagert sind.

Fig 1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 196 073 (COMMISSARIAT A L'ENERGIE ATOMIQUE) <br> * das ganze Dokument * | 1 | G01N3/04 |
| A | | 2,3 | |
| A | US-A-3 347 091 (T. CYMMER ET AL.) <br> * Spalte 1, Zeile 62 - Spalte 2, Zeile 44; Abbildungen 3,4 * | 5,6 | |
| A | US-A-4 194 402 (J.P. DE NICOLA) <br> * Spalte 2, Zeile 31 - Zeile 60 * | 4 | |
| A | US-A-4 928 532 (D.G. O'CONNOR ET AL.) <br> * Spalte 3, Zeile 12 - Spalte 4, Zeile 30 * | 1,7 | |
| A | FR-A-2 626 671 (ARMINES) <br> * Seite 3, Zeile 13 - Seite 8, Zeile 21 * | 1,2 | |

**RECHERCHIERTE SACHGEBIETE (Int. Cl.5 )**

G01N

Der vorliegende Recherchenbericht wurde für alle Patentansprüche erstellt

| Recherchenort | Abschlußdatum der Recherche | Prüfer |
|---|---|---|
| DEN HAAG | 01 AUGUST 1991 | BINDON C.A. |